# EUROPÄISCHE PATENTANMELDUNG

(11) **EP 0 603 584 A1**
(43) Veröffentlichungstag der Anmeldung: **29.06.1994**
(21) Anmeldenummer: 93119076.3
(22) Anmeldetag: 26.11.1993
(51) Int. Cl.: H04B 10/14, G02B 6/42

(54) **Optische Sender mit Laserdioden ohne verwendungsfokussierende Elementen**

(30) Priorität: 23.12.1992 DE 4243843
(71) Anmelder: KE KOMMUNIKATIONS-ELEKTRONIK GMBH & CO, D-30179 Hannover (DE)
(72) Erfinder: Ocker, Johannes, D-30453 Hannover (DE); Puschmann, Norbert, D-30826 Garbsen (DE)
(74) Vertreter: Döring, Roger, Dipl.-Ing.

(57) **Zusammenfassung**

Es wird ein Übertragungssystem zur Übertragung optischer Signale über Lichtwellenleiter angegeben, bei welchem Monomodefasern als Lichtwellenleiter und Laserdioden mit einer Lichtwellenlänge von maximal 900 nm als optische Sender verwendet werden. Laserdiode und Monomodefaser sind unter Verwendung einer an der Laserdiode bzw. an einem dieselbe umgebenden Gehäuse befestigten Führung ohne fokussierende Elemente lediglich zusammengesteckt.

## Beschreibung

Die Erfindung bezieht sich auf ein Übertragungssystem zur Übertragung optischer Signale über Lichtwellenleiter, bei welchem Monomodefasern als Lichtwellenleiter und Laserdioden mit einer Lichtwellenlänge von maximal 900 nm als optische Sender verwendet werden (EP-OS 0 288 675).

Nachrichtentechnische Signale werden in zunehmendem Maße als optische Signale über Glasfasern übertragen. Im Fernkabelbereich werden bei Neuinstallationen nahezu ausschließlich optische Kabel mit Glasfasern als Lichtwellenleiter eingesetzt. Die fortschreitende Technik mit immer besseren und billigeren Glasfasern gibt die Möglichkeit, auch im Teilnehmeranschlußbereich optische Kabel statt der bisher üblichen elektrischen Kabel zu verwenden. Für einen sinnvollen Einsatz der Lichtwellenleiter auch in diesen Bereichen von Übertragungsnetzen, bei denen relativ kurze Strecken von maximal etwa 4 km überbrückt werden müssen, werden auch preiswerte Geräte und Anschlußtechniken benötigt.

Bei dem Verfahren nach der DE-Z "Wiss. Ber. AEG-TELEFUNKEN 53 (1980) 1-2", Seiten 56 bis 61, wird an den als Injektionslaser ausgebildeten optischen Sender eine Gradientenfaser als Lichtwellenleiter angeschlossen. Das am Injektionslaser liegende Ende der Gradientenfaser ist zu einer sphärischen Linse kurzer Brennweite geformt. Injektionslaser und Gradientenfaser werden mit optimalem Abstand zueinander fixiert und mit anderen Bauteilen in einer Laserendstufe vereint. Der Aufwand zur Herstellung der Laserendstufe ist so hoch, daß sich ihr Einsatz im Teilnehmerbereich eines Übertragungsnetzes aus Kostengründen verbietet.

Die EP-OS 0 265 918 beschreibt ein optisches Übertragungssystem, bei dem als optischer Sender eine Laserdiode mit einer Lichtwellenlänge im Bereich von 800 nm und als Lichtwellenleiter eine Monomodefaser mit einer Grenzwellenlänge von 1280 nm verwendet werden. Diese Laserdioden sind auf unterschiedlichsten technischen Gebieten im Einsatz und daher preiswert. Der Aufwand für das Übertragungssystem ist jedoch immer noch relativ hoch, da die Laserdiode unter Verwendung eines speziellen Klebers als fokussierendes Element an den Lichtwellenleiter angekoppelt ist. Es soll dadurch erreicht werden, daß nur ein einziger Modus im Lichtwellenleiter angeregt wird, damit der Einfluß der Dispersion desselben auf die übertragenen Signale minimiert werden kann.

Das gilt im wesentlichen auch für das Übertragungssystem nach der eingangs erwähnten EP-OS 0 288 675. Hier wird eine 1300 nm Standard-Einmodenfaser als Lichtwellenleiter eingesetzt und als optischer Sender wird eine Laserdiode mit einer Lichtwellenlänge zwischen 700 nm und 900 nm verwendet, wie sie bei digitalen CD-Geräten eingesetzt wird. Hinweise darauf, wie Einmodenfaser und Laserdiode miteinander verbunden werden und welche Moden für die Übertragung auf dem Lichtwellenleiter verwendet werden, sind dieser Druckschrift nicht zu entnehmen.

Der Erfindung liegt die Aufgabe zugrunde, das eingangs geschilderte Übertragungssystem weiter zu vereinfachen.

Diese Aufgabe wird gemäß der Erfindung dadurch gelöst, daß Laserdiode und Monomodefaser unter Verwendung einer an der Laserdiode bzw. an einem dieselbe umgebenden Gehäuse befestigten Führung ohne fokussierende Elemente lediglich zusammengesteckt sind.

Durch die Kombination der bezüglich der Lichtwellenlänge begrenzten Laserdiode mit der Monomodefaser können - wie bei den geschilderten bekannten Übertragungssystemen - optische Signale ohne großen Aufwand über kurze Strecken auf Lichtwellenleitern - im folgenden kurz "LWL" genannt - übertragen werden. Das von den Laserdioden ausgehende Licht tritt in die beispielweise für Wellenlängen von 1300 nm bzw. 1500 nm ausgelegte Monomodefaser ein, und zwar bewußt ohne fokussierende Elemente, wie beispielsweise Linsen oder Kleber. Die Monomodefaser wird mittels der zentrierenden Führung mit ihrer Stirnseite nur so nah wie möglich an die Laserdiode herangeführt. Als Führung wird vorzugsweise ein Rohr verwendet. Die Monomodefaser wird bei diesem Übertragungssystem unterhalb ihrer Grenzwellenlänge quasi als Stepindexfaser genutzt. In der Monomodefaser breiten sich daher mehrere Moden aus. Das wird bei diesem Übertragungssystem nicht nur in Kauf genommen, sondern zur wesentlichen Vereinfachung desselben ohne jegliche Beeinflussung so gelassen. Dabei hat sich überraschend herausgestellt, daß trotz der unterschiedlichen Moden auf den hier interessierenden, relativ kurzen Strecken bis etwa 4 km Länge, wie sie im Teilnehmeranschlußbereich gegeben sind, ein einwandfreies Signal empfangen wird. Es sind also trotz der sehr einfachen Zuordnung von Laserdiode und Monomodefaser weder auf der Sendeseite noch auf der Empfangsseite besondere Maßnahmen für die Übertragung der optischen Signale erforderlich.

Das Übertragungssystem nach der Erfindung wird anhand der Zeichnungen als Ausführungsbeispiel erläutert.

Es zeigen:
Fig. 1 in schematischer Darstellung eine Anordnung zur Übertragung optischer Signale.
Fig. 2 eine für das Übertragungssystem nach der Erfindung geeignete Anordnung vor der Endmontage.
Fig. 3 eine Ausführungsform dieser Anordnung nach erfolgter Montage in vergrößerter Darstellung.

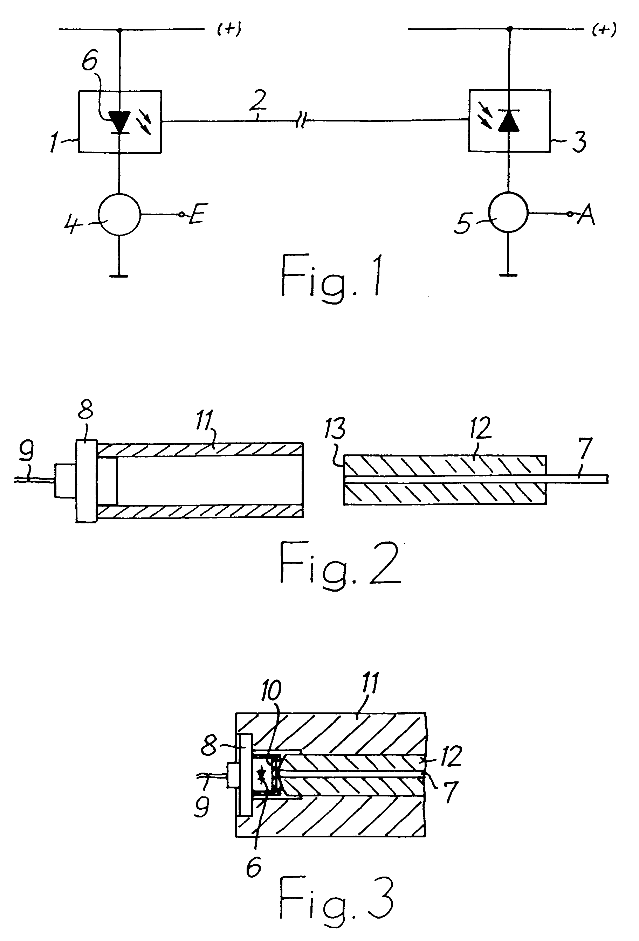

Bei der in Fig. 1 dargestellten Übertragungsstrecke optischer Signale wird Licht von einem optischen Sender 1 über einen LWL 2 zu einem optischen Empfänger 3 übertragen. Sender 1 und Empfänger 3 werden über Stellglieder 4 bzw. 5 mit Strom versorgt. Die dem Stellglied 4 über den Eingang E aufmodulierten Signale werden am Ausgang A des Stellgliedes 5 zurückgewonnen. Der optische Sender 1 ist eine Laserdiode 6. Sein Aufbau geht in genauerer Darstellung aus den Fig. 3 bis 5 hervor. Der LWL 2 besteht aus einer Monomodefaser 7. Als Empfänger 3 kann jede geeignete Empfangsdiode eingesetzt werden.

Die Laserdiode 6 kann in einem Gehäuse 8 untergebracht sein, das aus mechanisch stabilem Material besteht, beispielsweise aus Metall. Die elektrischen Anschlüsse 9 sind in das Gehäuse 8 hineingeführt. Das Gehäuse 8 kann durch eine Glasscheibe 10 abgeschlossen sein. Auf das Gehäuse 8 ist gemäß Fig. 2 ein Rohr 11 aufgesteckt, das ebenfalls aus mechanisch festem Material besteht, beispielsweise aus Metall oder Kunststoff. Das Rohr 11 verläuft rechtwinklig zur Glasscheibe 10. Sein Innendurchmesser ist zur Aufnahme des entsprechend präparierten Endes der Monomodefaser 7 maßgenau hergestellt. Es dient so als zentrierende Führung für die Monomodefaser 7, wenn diese mit der Laserdiode 6 zusammengesteckt wird.

Am Ende der Monomodefaser 7 kann ein Träger 12 angebracht sein, welcher die Monomodefaser 7 fest umschließt. Der Träger 12 besteht beispielsweise aus Metall oder Keramik. Seine Stirnfläche wird nach seiner Festlegung auf der Monomodefaser 7 geschliffen, so daß auch die Stirnfläche der Monomodefaser 7 geschliffen wird. Die Stirnflächen von Träger 12 und Monomodefaser 7 können plan aber auch konvex geschliffen sein.

Zum Zusammenfügen von Laserdiode 6 und Monomodefaser 7 wird der Träger 12 mit der umschlossenen Monomodefaser 7 in das Rohr 11 eingesteckt, bis die Stirnfläche 13 bis an das Gehäuse 8 heranragt. In dieser Position wird der Träger 12 beispielsweise durch Kleben im Rohr 11 festgelegt. Eine solche Anordnung ist in Fig. 3 dargestellt. Durch die in diesem Ausführungsbeispiel konvexe Stirnfläche 13 kann die Stirnfläche der Monomodefaser 7 bis zur Anlage an der Glasscheibe 10 herangeführt werden. Sie ist damit so nah wie möglich an die Laserdiode 6 herangeführt. Das kann bei kleineren Abmessungen des Trägers 12 auch mit einer planen Stirnfläche 13 erreicht werden. Zwischen Stirnfläche 13 und Gehäuse 8 bzw. Glasscheibe 10 kann aber auch ein schmaler Spalt verbleiben.

## Patentansprüche

1. Übertragungssystem zur Übertragung optischer Signale über Lichtwellenleiter, bei welchem Monomodefasern als Lichtwellenleiter und Laserdioden mit einer Lichtwellenlänge von maximal 900 nm als optische Sender verwendet werden, dadurch gekennzeichnet, daß Laserdiode (6) und Monomodefaser (7) unter Verwendung einer an der Laserdiode (6) bzw. an einem dieselbe umgebenden Gehäuse (8) befestigten Führung ohne fokussierende Elemente lediglich zusammengesteckt sind.

2. Übertragungssystem nach Anspruch 1, dadurch gekennzeichnet, daß Laserdiode (6) und Monomodefaser (7) so zusammengesteckt sind, daß die Stirnseite der Monomodefaser (7) an der Laserdiode (6) bzw. an deren Gehäuse (8) liegt.
